(19) Europäisches Patentamt
European Patent Office
Office européen des brevets

(11) **EP 3 155 377 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(21) Anmeldenummer: **15731529.2**

(22) Anmeldetag: **08.06.2015**

(51) Int Cl.:
*G01D 5/244* (2006.01)          *G01D 1/16* (2006.01)
*G01D 3/08* (2006.01)          *G01C 21/16* (2006.01)

(86) Internationale Anmeldenummer:
**PCT/EP2015/062690**

(87) Internationale Veröffentlichungsnummer:
**WO 2015/189140 (17.12.2015 Gazette 2015/50)**

(54) **VERFAHREN UND SYSTEM ZUR VERIFIZIERUNG VON MESSDATEN**

METHOD AND SYSTEM FOR VERIFYING MEASUREMENT DATA

PROCÉDÉ ET SYSTÈME DE VÉRIFICATION DE DONNÉES DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2014 DE 102014211168**

(43) Veröffentlichungstag der Anmeldung:
**19.04.2017 Patentblatt 2017/16**

(73) Patentinhaber: **Continental Teves AG & Co. OHG 60488 Frankfurt (DE)**

(72) Erfinder:
• **HEIDE, Dirk**
**67251 Freinsheim (DE)**
• **STEINHARDT, Nico**
**60327 Frankfurt (Main) (DE)**

(74) Vertreter: **Büchner, Jörg**
**Conti Temic microelectronic GmbH**
**Intellectual Property**
**Sieboldstrasse 19**
**90411 Nürnberg (DE)**

(56) Entgegenhaltungen:
**EP-A1- 0 342 375          WO-A1-2012/025777**
**DE-A1- 10 243 265          DE-A1-102012 216 211**
**DE-A1-102012 216 215          US-B1- 7 031 031**

**Beschreibung**

Die Erfindung betrifft ein Verfahren zur Verifizierung von Messdaten gemäß Oberbegriff von Anspruch 1, ein System zur Verifizierung von Messdaten gemäß Oberbegriff von Anspruch 11 sowie eine Verwendung des Systems.

Alle Messdaten sind prinzipiell fehlerbehaftet und in vielen Fällen ist eine durchgängige Verfügbarkeit der Messdaten nicht gegeben. Zusätzlich sind die Messdaten häufig abhängig von Umgebungsbedingungen. Weiterhin haben unterschiedliche Sensoren bzw. Sensorsysteme im Allgemeinen unterschiedliche zeitliche Erfassungsraten, sind nicht mit anderen Sensoren bzw. Sensorsystemen synchronisiert und besitzen eine Latenzzeit zwischen der Messung und der Ausgabe der Messwerte. Sensorfehler bzw. Messfehler lassen sich dabei in quasistationäre, über mehrere Messungen konstante Anteile, wie z.B. einen Offset, und statistische, von Messung zu Messung zufällige Anteile, wie z.B. Rauschen, unterteilen. Während die zufälligen Anteile prinzipiell nicht deterministisch korrigierbar sind, lassen sich quasistationäre Fehler im Allgemeinen bei gegebener Beobachtbarkeit korrigieren. Nicht korrigierbare signifikante Fehler lassen sich bei gegebener Erkennbarkeit üblicherweise zumindest vermeiden.

Im Stand der Technik sind in diesem Zusammenhang bereits Sensorfusionsverfahren bekannt, welche üblicherweise auch dazu geeignet sind, Messdaten von unterschiedlichen Sensoren bzw. Sensorsystemen zu korrigieren bzw. zu filtern. Insbesondere im Automotive-Bereich sind dabei besondere Anforderungen zu berücksichtigen, da eine Vielzahl von unterschiedlichen Sensoren eine gemeinsame Umfeldsituation bzw. einen Kraftfahrzeugzustand mittels unterschiedlicher Messprinzipien erfasst und diese Umfeldsituation bzw. diesen Kraftfahrzeugzustand mittels einer Vielzahl unterschiedlicher Messdaten beschreibt. Für eine im Automotive-Bereich anwendbare Sensorfusion ist somit eine möglichst große Robustheit gegen zufällige Störungen sowie eine Erkennung und Kompensation von systematischen Fehlern gefordert. Ebenso sind zeitliche Einflüsse auf die Messdaten zu korrigieren und temporäre Ausfälle oder die Nichtverfügbarkeit von Sensoren zu überbrücken.

Aus der DE 10 2010 063 984 A1 ist ein mehrere Sensorelemente umfassendes Sensorsystem bekannt. Die Sensorelemente sind so ausgebildet, dass sie zumindest teilweise unterschiedliche primäre Messgrößen erfassen und zumindest teilweise unterschiedliche Messprinzipien nutzen. Aus der primären Messgröße der Sensorelemente werden dann zumindest teilweise weitere Messgrößen abgeleitet. Weiterhin umfasst das Sensorsystem eine Signalverarbeitungseinrichtung, eine Schnittstelleneinrichtung sowie mehrere Funktionseinrichtungen. Die Sensorelemente sowie sämtliche Funktionseinrichtungen sind dabei mit der Signalverarbeitungseinrichtung verbunden. Die primären Messgrößen liefern also redundante Informationen, die in der Signalverarbeitungseinrichtung miteinander verglichen werden bzw. sich gegenseitig stützen können. Aus dem Vergleich der auf verschiedenem Weg berechneten Observablen können Rückschlüsse auf die Zuverlässigkeit und Genauigkeit der Observablen gezogen werden. Die Signalverarbeitungseinrichtung qualifiziert die Genauigkeit der Observablen und stellt die Observablen zusammen mit einer Genauigkeitsangabe über eine Schnittstelleneinrichtung verschiedenen Funktionseinrichtungen zur Verfügung.

Die DE 10 2012 216 211 A1 beschreibt ein Verfahren zum Auswählen eines Satelliten, wobei der Satellit ein Satellit eines globalen Navigationssystems ist. Bevor ein derartiger Satellit dabei zur Positionsbestimmung bzw. eines Fahrzeugs herangezogen wird, werden die empfangenen GNSS-Signale auf unterschiedliche Arten plausibilisiert. Für diese Verifizierung werden jeweils unterschiedliche Redundanzen bzw. bekannte Zusammenhänge ausgenutzt. So offenbart die DE 10 2012 216 211 A1 etwa, aus dem Signal eines Satelliten sowohl den Abstand des Fahrzeugs zum Satelliten als auch die Relativgeschwindigkeit des Fahrzeugs zum Satelliten zu bestimmen. Der Abstand kann dabei mittels der Laufzeit des Signals bestimmt werden, während die Relativgeschwindigkeit mittels einer Phasenmessung des Signals bestimmt werden kann. Da der Abstand und die Relativgeschwindigkeit voneinander abhängen, können sie gegeneinander verifiziert werden. Weiterhin kann eine Verifizierung der aus dem Signal bestimmten Werte gegen bekannte Randbedingungen erfolgen, da ein Fahrzeug sich üblicherweise innerhalb eines bestimmten Geschwindigkeitsrahmens fortbewegt. Ebenso wird beschrieben, dass bei Empfang mehrerer Signale von unterschiedlichen Satelliten die Abstände zu mehreren Satelliten bestimmt werden und diese Abstände gleichzeitig mittels trigonometrischer Zusammenhänge und dem bekannten Abstand der Satelliten gegeneinander verifiziert werden. Schließlich ist auch eine Verifizierung des aus dem Signal bestimmten Abstands bzw. der aus dem Signal bestimmten Geschwindigkeit mittels anderer Sensoren, welche ebenfalls eine Positionsbestimmung bzw. Geschwindigkeitsbestimmung zulassen, möglich. Sofern die Signale eines Satelliten nicht verifiziert werden können, wird dieser Satellit nicht zur Positionsbestimmung bzw. zur Geschwindigkeitsbestimmung herangezogen.

Die DE 102 43 265 A1 beschreibt ein Messsystem zur Verifizierung von Messdaten eines Sensorsystems, wobei eine identische Größe beschreibende Werte der Messdaten untereinander einem Vergleich zu unterworfen werden.

Aus der DE 10 2012 216 215 A1 geht des Weiteren ein Sensorsystem mit mehreren Sensorelementen und einer Signalverarbeitungseinrichtung hervor, wobei die Signalverarbeitungseinrichtung so ausgebildet ist, dass sie die Sensorsignale der Sensorelemente zumindest teilweise gemeinsam auswertet.

Die im Stand der Technik bekannten, gattungsgemäßen Verfahren und Sensorsysteme sind jedoch insofern nachteilbehaftet, als dass diese vorhandene Redundanzen nicht optimal zur Fehlererkennung bzw. wechselseitigen Verifizierung der Messwerte ausnutzen.

Es ist daher eine Aufgabe der Erfindung, ein verbessertes Verfahren zur Verifizierung von Messdaten vorzuschlagen.

Diese Aufgabe wird erfindungsgemäß durch das Verfahren zur Verifizierung von Messdaten eines oder mehrerer Sensorsysteme gemäß Anspruch 1 gelöst.

Die Erfindung betrifft ein Verfahren zur Verifizierung von Messdaten mindestens eines Sensorsystems (103, 104, 203, 204), wobei die Messdaten direkt oder indirekt Werte von physikalischen Größen beschreiben, wobei die Werte von indirekt beschriebenen physikalischen Größen aus den Messdaten und/oder aus bekannten physikalischen und/oder mathematischen Zusammenhängen berechnet werden, wobei mindestens drei eine identische Größe beschreibende Werte untereinander paarweise einem Vergleich unterworfen werden und wobei mindestens zwei der mindestens drei eine identische Größe beschreibenden Werte voneinander unabhängig vom mindestens einen Sensorsystem (103, 104, 203, 204) bestimmt werden und ein dritter eine identische Größe beschreibender Wert von einem Basissensorsystem (101, 201) bestimmt wird.

Daraus ergibt sich der Vorteil, dass die vorhandenen Redundanzen weitestgehend optimal ausgenutzt werden können, da sowohl parallele Redundanzen (d.h., die vom Sensorsystem und vom Basissensorsystem erfassten identische Größen beschreibenden Werte) als auch analytische Redundanzen (d.h., die vom Sensorsystem voneinander unabhängige, identische Größen beschreibenden Werte) genutzt werden.

Ein weiterer Vorteil des erfindungsgemäßen Verfahrens ist die weitestgehende Unabhängigkeit von einem im Stand der Technik oftmals genutzten Fusionsalgorithmus, wodurch die Sensitivität der Detektion bzw. der Verifizierung nicht mehr von dessen stochastischem Modell bzw. dem vom Modell berücksichtigten Rauschen und den vom Modell berücksichtigten Messfehlern beeinflusst wird. Die Sensitivität des erfindungsgemäßen Verfahrens ist also weitestgehend unabhängig vom Systemrauschen eines im Stand der Technik oftmals genutzten, sog. Fusionsfilters. Dadurch ist das erfindungsgemäße Verfahren vergleichsweise robuster, insbesondere in stark gestörten Szenarien.

Bevorzugt ist es vorgesehen, dass bei jedem paarweisen Vergleich, der zu einer Nicht-Übereinstimmung führt, ein den am Vergleich beteiligten Werten zugeordneter Gütezähler um einen vorgegebenen Stellwert erhöht wird und dass diejenigen Werte verifiziert werden, deren Gütezähler einen Güteschwellenwert nicht überschreitet. Daraus ergibt sich der Vorteil, dass anhand des Stellwerts des Gütezählers am Ende des Verfahrens vergleichsweise genau die Güte der entsprechenden Messdaten bzw. die Güte der Werte der Messdaten bestimmbar ist. Abhängig vom Überschreiten des Güteschwellenwerts werden nun die entsprechenden Messdaten bzw. die Werte der Messdaten verifiziert. Das Erkennen eines fehlerhaften Werts ist also einfach über seinen Gütezähler möglich. Dies ermöglicht auch eine klare Unterscheidung eines fehlerhaften Werts von einem korrekten Wert bzw. ein klares Erkennen des fehlerhaften Werts als solchen am Ende des Vergleichs. Wenn der Gütezähler eines Werts den Güteschwellenwert am Ende des Vergleichs überschreitet, dann wird der entsprechende Wert als fehlerhaft gekennzeichnet. Dies bedeutet beispielsweise, dass der entsprechende Wert nicht weiterverarbeitet bzw. verworfen und gelöscht wird.

Der vorgegebene Stellwert, um den der Gütezähler der am Vergleich beteiligten Werte bei einer Nicht-Übereinstimmung erhöht wird, kann z.B. "1" sein. Ebenso ist es aber möglich und bevorzugt, dass der Wert des Stellwerts abhängig von einem Grad der Nicht-Übereinstimmung vorgegeben wird. Z.B. kann bei einer nur geringfügigen Abweichung bzw. Nicht-Übereinstimmung der vorgegebene Stellwert "0,1" sein, wohingegen bei einer extremen Abweichung bzw. Nicht-Übereinstimmung der vorgegebene Stellwert "2" sein kann. Letzteres begünstigt auch das gleichzeitige Erkennen von zwei paarweise miteinander verglichenen Werten, welche beide fehlerhaft sind.

Sofern das erfindungsgemäße Verfahren zur Verifizierung beispielsweise mit drei Werten durchgeführt wird, werden also drei paarweise Vergleiche vorgenommen. Da die drei Werte eine identische physikalische Größe beschreiben, etwa eine Geschwindigkeit, müssen sie übereinstimmen, falls alle Werte fehlerfrei sind. Falls jedoch einer der Werte fehlerhaft ist, wird bei zwei der drei Vergleiche auf Nicht-Übereinstimmung erkannt, nämlich bei den beiden Vergleichen, an denen jeweils der fehlerhafte Wert beteiligt ist. Wenn der Gütezähler eines jeden der drei Werte bei einer Nicht-Übereinstimmung um "1" erhöht wird, weisen die Gütezähler der fehlerfeien Werte schließlich jeweils den Wert "1" auf, während der fehlerhafte Wert den Wert "2" aufweist. Falls der Güteschwellenwert nun bei "1,5" liegt, werden die fehlerfreien Werte verifiziert, wohingegen der fehlerhafte Wert verworfen wird.

Im Folgenden soll noch ein allgemeines Beispiel zur Verifizierung von Messdaten anhand des Gütezählers gegeben werden: Bei Vorliegen von n Messdaten bzw. Werten und einer Erhöhung des Gütezählers bei Nicht-Übereinstimmung von zwei Werten während eines paarweisen Vergleichs um den Stellwert "1", beträgt der Güteschwellwert nach der Gaußschen Summenformel [(n-1*n)]/2. D.h. also, dass ein Wert, dessen zugeordneter Gütezähler den Wert n-1 erreicht, verworfen wird. Der Wert n kann dabei vorteilhafterweise abhängig gemacht werden von der Art der Sensorsysteme bzw. des Basissensorsystems, beispielsweise bei einem sog. GPS-Navigationssystem von der Anzahl der erfassbaren GPS-Satelliten.

Das erfindungsgemäße Verfahren wird bevorzugt in einem Kraftfahrzeug zur Verifizierung von Positionsdaten bzw. Geschwindigkeitsdaten eingesetzt.

Weiterhin ist es bevorzugt, dass die Messdaten nach der Verifizierung g einem an sich bekannten Sensordatenfusionsprozess zur Verfügung gestellt werden, welcher aus den unterschiedlichen Messdaten einen Fusionsdatensatz erzeugt.

Es ist vorteilhaft, dass der Vergleich über ein sensorsystemindividuelles stochastisches Modell erfolgt, wobei das stochastische Modell sensorsystemindividuelle Messunsicherheiten berücksichtigt. Daraus ergibt sich der Vorteil, dass für den Vergleich auch den sensorsystemindividuellen Eigenschaften und insbesondere dem Rauschen der Messdaten bzw. der Werte Rechnung getragen wird. Dies verbessert die Zuverlässigkeit und die Robustheit der erfindungsgemäßen Verifizierung, da Nicht-Übereinstimmungen während des Vergleichs im Rahmen sensorsystemindividuellen Eigenschaften bzw. des Rauschens toleriert werden.

Weiterhin ist es vorteilhaft, dass ein dem Basissensorsystem zugeordneter Gütezähler niemals erhöht wird. Dies bedeutet im Sinne der Erfindung jedoch nicht, dass die Werte der Messdaten des Basissensorsystems exakt sind, sondern nur, dass sie innerhalb eines statistischen Toleranzbereichs, welcher z.B. Rauscheinflüsse berücksichtigt, ihrem stochastischen Modell entsprechen. Somit wird also davon ausgegangen, dass das Basissensorsystem im Gegensatz zu den anderen Sensorsystemen von äußeren Störungen unbeeinflusst ist und lediglich Weißem Rauschen unterliegt. Die Werte des Basissensorsystems werden daher immer verifiziert. Daher werden bei einem Vergleich, während dessen auf Nicht-Übereinstimmung erkannt wird, stets nur die Gütezähler der Werte von Messdaten des anderen Sensorsysteme erhöht.

Es ist bevorzugt, dass das Trägheitsnavigationssystem das Basissensorsystem ist.

Bevorzugt ist es vorgesehen, dass die dem Vergleich unterworfenen Werte zu einem identischen Zeitpunkt erfasst wurden. Daraus ergibt sich der Vorteil, dass - zumindest bei fehlerfreier Messung - alle dem Vergleich unterworfenen Werte übereinstimmen, da sie dieselbe physikalische Größe zum selben Zeitpunkt beschreiben. Dies vereinfacht das Erkennen von fehlerhaften Werten, da die Ursache einer Nicht-Übereinstimmung in diesem Fall zwangsläufig ein fehlerhafter Wert sein muss.

Besonders bevorzugt ist es vorgesehen, dass die dem Vergleich unterworfenen Werte mittels Interpolation erzeugt werden, falls keine zu einem identischen Zeitpunkt erfassten Werte vorliegen. Da die Messdaten aufgrund unterschiedlicher Signalausgabeverzögerungen und im Allgemeinen aufgrund fehlender Synchronisation der Sensorsysteme untereinander üblicherweise zu unterschiedlichen Zeitpunkten erfasst werden oder zumindest zu unterschiedlichen Zeitpunkten von den Sensorsystemen ausgegeben werden, können mittels der Interpolation die benötigten Werte berechnet werden. Bevorzugt werden dabei Messdaten bzw. Werte des Sensorsystems mit der geringsten Signalausgabeverzögerung mittels Interpolation erzeugt, d.h. also, dass diese Messdaten bzw. Werte in Abhängigkeit der Erfassungszeitpunkte der Messdaten bzw. Werte der anderen Sensorsysteme erzeugt werden. Zweckmäßigerweise werden für die Erzeugung eines Werts mittels Interpolation die beiden dem zu erzeugenden Wert zeitlich am nahesten liegenden und diesen einschließenden Werte des Sensorsystems mit der geringsten Signalausgabeverzögerung herangezogen. Der mittels Interpolation erzeugte Wert wird dann wie beschrieben dem Vergleich unterworfen. Das Sensorsystem mit der geringsten Signalausgabeverzögerung ist dabei ganz besonders bevorzugt das Basissensorsystem.

Weiterhin ist es besonders bevorzugt vorgesehen, dass Änderungen der Werte für die Interpolation als proportional zur Zeit angenommen werden. Somit erfolgt also eine lineare Interpolation. Daraus ergibt sich der Vorteil, dass die Interpolation vergleichsweise einfach und entsprechend mit nur geringem Rechenaufwand ausführbar ist.

Ebenso ist es bevorzugt, dass bei einem Vergleich auf Nicht-Übereinstimmung erkannt wird, wenn die Werte um mehr als ihre Messunsicherheiten voneinander abweichen. Die Messunsicherheiten werden dabei mittels eines stochastischen Modells festgelegt, welchem die Werte gerecht werden müssen. Ein derartiges stochastisches Modell kann z.B. eine einfache Gauß-Verteilung, wobei die Übereinstimmung bzw. die Nicht-Übereinstimmung z.B. mittels eines sog. NIS-Tests ("Normalized Innovation Squared") überprüft wird. Dem Fachmann ist in diesem Zusammenhang eine Reihe von geeigneten stochastischen Modellen bekannt. Besonders bevorzugt wird für jedes Sensorsystem ein individuelles stochastisches Modell gewählt, welches der statistischen Natur des jeweiligen Sensorsystems am besten gerecht wird. Daraus ergibt sich der Vorteil, dass lediglich durch Rauschen oder andere geringfügige Störeinflüsse verursachte Abweichungen der Werte nicht zum Erkennen auf Nicht-Übereinstimmung führen und somit ein im Wesentlichen fehlerfreier Wert nicht irrtümlich als fehlerhaft erkannt wird und entsprechend nicht verifiziert würde.

Des Weiteren ist es bevorzugt, dass die verifiziert Werte zu einem Fusionsdatensatz fusioniert werden. Die verifiziert und zu einem Fusionsdatensatz fusionierten Werte sind besonders zuverlässig und präzise. Insbesondere erfolgt die Fusion der verifiziert Werte zu einem Fusionsdatensatz mittels eines sog. Error-State-Space-Kalman-Filters. Das Error-State-Space-Kalman-Filter stellt dabei ein Fusionsfilter zur Fusion der Messwerte dar, insbesondere zur Fusion von normalverteilten Messwerten. Gleichzeitig schätzt bzw. bestimmt das Error-State-Space-Kalman-Filter bevorzugt quantitative Fehler der Werte mindestens eines Sensorsystems. Eine Besonderheit des Error-State-Space-Kalman-Filters ist es nämlich, dass anstelle der Werte lediglich quantitative Fehler der Werte inkrementell geschätzt bzw. bestimmt werden und anschließend die Werte mittels Korrekturen korrigiert werden. Die Fehlerwerte haben nämlich eine signifikant niedrigere zeitliche Dynamik als die Messwerte selbst, wodurch eine weitgehende Entkopplung der Dynamik des Error-State-Space-Kalman-Filters von den Sensoreigenschaften erreicht wird und zusätzliche Verzögerungen bzw. Fehler durch unterschiedliche Gruppenlaufzeiten der Einzelsignale eines Signalpakets reduziert werden.

Eine weitere Besonderheit des Error-State-Space-Kalman-Filters ist es, dass durch die Anbringung einer Korrektur die geschätzten bzw. bestimmten quantitativen Fehler der Werte nach jedem Arbeitszyklus des Error-State-Space-Kalman-Filters Null sind, wodurch ein sonst üblicher Prädiktionsschritt zur Vorhersage der quantitativen Fehler im folgenden Arbeitszyklus entfällt, wodurch sich also der Rechenaufwand für das Error-State-Space-Kalman-Filter reduziert.

Außerdem ist es bevorzugt, dass die Messdaten zumindest Messdaten eines Trägheitsnavigationssystems, Messdaten eines globalen Satellitennavigationssystems und/oder Messdaten eines Odometrienavigationssystems sind. Damit ist die vorliegende Erfindung insbesondere zu Navigationszwecken und für Navigationssysteme, insbesondere in Kraftfahrzeugen, geeignet. Das erfindungsgemäße Verfahren bestimmt somit also u.a. die Position, die Geschwindigkeit und die Ausrichtung, bevorzugt für ein Kraftfahrzeug, aus den Messdaten. Bei dem globalen Satellitennavigationssystem kann es sich beispielsweise um ein sog. GPS-Navigationssystem handeln. Besonders zweckmäßig ist es, dass das Satellitennavigationssystem mindestens zwei Satellitensignalempfänger umfasst. Dadurch verbessert sich die Qualität der erfassten Satellitensignale und somit die Zuverlässigkeit und Genauigkeit des Satellitennavigationssystems. Das Odometrienavigationssystem bestimmt zunächst die Geschwindigkeit, z.B. über die Drehgeschwindigkeit sowie den bekannten Abrollumfang der Kraftfahrzeugreifen, und daraus über ein Fortschreiben einer bekannten Position unter Berücksichtigung des Lenkwinkels die aktuelle Position. Das Trägheitsnavigationssystem kann z.B. je drei zueinander orthogonal erfassende Trägheitssensoren für Translationsbewegungen und für Rotationsbewegungen in alle Raumrichtungen umfassen, welche ähnlich wie das Odometrienavigationssystem eine Fortschreibung einer bekannten Position ermöglichen.

Schließlich ist es bevorzugt, dass zur Berechnung von Werten von indirekt beschriebenen Größen Umlaufbahnen von Satelliten des Satellitennavigationssystems als fehlerfrei angenommen werden. Die Umlaufbahnen der Satelliten stellen für einige der indirekt beschriebenen Größen notwendige physikalische bzw. mathematische Zusammenhänge zu deren Berechnung dar. Daraus ergibt sich der Vorteil, dass ein dem betreffenden indirekt beschriebenen Wert evtl. zugrunde gelegtes stochastisches Modell keinerlei Fehlereinflüsse der Umlaufbahnen berücksichtigen muss und entsprechend enge Toleranzen für die Werte bei Abweichungen vom stochastischen Modell aufweisen kann. Dies erhöht also die Anforderungen an die zu plausibilisierenden Werte und verbessert damit die Güte der Plausibilisierung.

Die Erfindung betrifft weiterhin ein System zur Verifizierung von Messdaten mindestens eines Sensorsystems, umfassend mindestens ein Sensorsystem, ein Basissensorsystem und ein Verifizierungsmodul, wobei das mindestens eine Sensorsystem und das Basissensorsystem dazu ausgebildet sind, direkt oder indirekt Werte von physikalischen Größen beschreibende Messdaten auszugeben, wobei das Verifizierungsmodul dazu ausgebildet ist, die Werte von indirekt beschriebenen physikalischen Größen aus den Messdaten und/oder aus bekannten physikalischen und/oder mathematischen Zusammenhängen zu berechnen, wobei das Verifizierungsmodul dazu ausgebildet ist, mindestens drei eine identische Größe beschreibende Werte untereinander paarweise einem Vergleich zu unterwerfen und wobei das mindestens eine Sensorsystem dazu ausgebildet ist, mindestens zwei der mindestens drei eine identische Größe beschreibenden Werte voneinander unabhängig zu bestimmen und dass das Basissensorsystem dazu ausgebildet ist, einen dritten eine identische Größe beschreibender Wert zu bestimmen.. Da das erfindungsgemäße System also zur Ausführung des erfindungsgemäßen Verfahrens ausgebildet ist, und dieses insbesondere auch ausführt, führt es in Verbindung mit den genannten Sensorsystemen zu den bereits beschriebenen Vorteilen. Das erfindungsgemäße System umfasst somit alle zur Ausführung des erfindungsgemäßen Verfahrens notwendigen Vorrichtungen.

Insbesondere kann das Plausibilisierungsmodul auch aus mehreren Teilmodulen bestehen.

Bevorzugt ist es vorgesehen, dass das System dazu ausgebildet ist das erfindungsgemäße Verfahren auszuführen.

Außerdem betrifft die Erfindung eine Verwendung des erfindungsgemäßen Systems in einem Kraftfahrzeug.

Weitere bevorzugte Ausführungsformen ergeben sich aus den Unteransprüchen und der nachfolgenden Beschreibung eines Ausführungsbeispiels an Hand von Figuren.

Es zeigen

Fig. 1 beispielhaft eine mögliche Ausbildungsform eines erfindungsgemäßen Systems, welches zur Positionsbestimmung ausgebildet ist, in einem Kraftfahrzeug und

Fig. 2 beispielhaft eine weitere mögliche Ausbildungsform eines erfindungsgemäßen Systems, welches ebenfalls zur Positionsbestimmung ausgebildet ist, in einem Kraftfahrzeug.

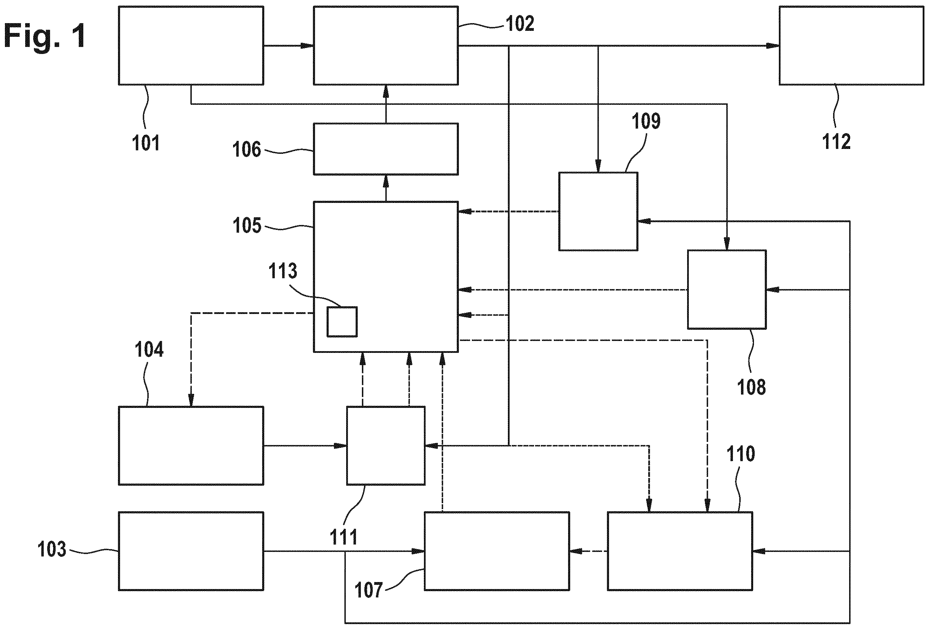

Fig. 1 zeigt in schematischer Darstellung ein Ausführungsbeispiel des erfindungsgemäßen Systems, das zur Anordnung und Verwendung in einem Kraftfahrzeug (nicht dargestellt) vorgesehen ist. Das dargestellte System ist beispielsgemäß zur Positionsbestimmung des Kraftfahrzeugs ausgebildet. Dabei sind alle vom System umfassten Elemente bzw. Bestandteile bzw. Sensorsysteme als Funktionsblöcke veranschaulicht und deren Zusammenwirken untereinander dargestellt.

Das System umfasst Trägheitsnavigationssystem 101, das so ausgebildet ist, dass es zumindest die Beschleunigungen entlang einer ersten, einer zweiten und einer dritten Achse sowie wenigstens die Drehraten um die erste, um die zweite und um die dritte Achse erfassen kann. Die erste Achse entspricht dabei beispielsgemäß der Längsachse des Kraftfahrzeugs, die zweite Achse entspricht der Querachse des Kraftfahrzeugs und die dritte Achse entspricht der Hochachse des Kraftfahrzeugs. Diese drei Achsen bilden ein kartesisches Koordinatensystem, das sog. Kraftfahrzeugkoordinatensystem. Trägheitsnavigationssystem 101 umfasst beispielsgemäß ausschließlich die zum Erfassen der Beschleunigungen und Drehraten notwendige Sensorik. Eine zur Verarbeitung bzw. Auswertung der Sensorsignale notwendige Elektronik ist beispielsgemäß nicht von Trägheitssensornavigationssystem 101 umfasst.

Trägheitsnavigationssystem 101 bildet beispielsgemäß zusammen mit weiter unten beschriebener Strapdown-Algorithmus-Einheit 102 das sog. Basissystem, dessen Messwerte mittels der im Folgenden beschriebenen sog. Korrektursysteme korrigiert werden. Die Korrektursysteme sind dabei Odometrienavigationssystem 103 und Satellitennavigationssystems 104.

Das System weist weiterhin eine sog. Strapdown-Algorithmus-Einheit 102 auf, in welcher ein sog. Strapdown-Algorithmus durchgeführt wird, mittels dessen die Messdaten von Trägheitsnavigationssystem 101 u.a. in Geschwindigkeitsdaten und Positionsdaten umgerechnet werden. Dazu werden die Messdaten von Trägheitsnavigationssystem 101, welche naturgemäß Beschleunigungen beschreiben, einmal bzw. zweimal über die Zeit integriert. Auch eine Ausrichtung des Kraftfahrzeugs wird mittels einmaliger Integration der entsprechenden Messdaten von Trägheitsnavigationssystem 101 über die Zeit bestimmt. Außerdem kompensiert Strapdown-Algorithmus-Einheit 102 eine auf Trägheitsnavigationssystem 101 wirkende Coriolisbeschleunigung sowie die Erdbeschleunigung, die sog. Erdtransportdrehrate und die Erddrehrate.

Die Ausgangsdaten von Strapdown-Algorithmus-Einheit 102 umfassen folglich die folgenden physikalischen Größen: die Geschwindigkeit, die Beschleunigung sowie die Drehrate des Kraftfahrzeugs, beispielsgemäß bezüglich der genannten drei Achsen des Kraftfahrzeugkoordinatensystems und beispielsgemäß zusätzlich jeweils bezogen auf ein Weltkoordinatensystem, das zur Beschreibung der Ausrichtung bzw. von dynamischen Größen des Kraftfahrzeugs auf der Welt geeignet ist. Beispielsgemäß handelt es sich bei dem genannten Weltkoordinatensystem um ein GPS-Koordinatensystem. Außerdem umfassen die Ausgangsdaten von Strapdown-Algorithmus-Einheit 102 die Position bezüglich des Kraftfahrzeugkoordinatensystems und die Ausrichtung hinsichtlich des Weltkoordinatensystems. Die von Strapdown-Algorithmus-Einheit 102 berechneten o.g. physikalischen Größen werden über Ausgabemodul 112 ausgegeben und anderen Kraftfahrzeugsystemen zur Verfügung gestellt.

Das System umfasst außerdem Odometrienavigationssystem 103 in Form von Raddrehzahlsensoren für jedes Rad des Kraftahrzeugs. Beispielgemäß handelt es sich um ein vierrädriges Kraftfahrzeug mit vier Raddrehzahlsensoren, die jeweils die Geschwindigkeit des ihnen zugeordneten Rads sowie dessen Drehrichtung erfassen. Weiterhin umfasst Odometrienavigationssystem 103 ein Lenkwinkelsensorelement, das den Lenkwinkel des Kraftfahrzeugs erfasst.

Darüber hinaus weist das beispielhaft dargestellte System Satellitennavigationssystem 104 auf, welches so ausgebildet ist, dass es die Entfernung jeweils zwischen einem zugeordneten Satelliten und dem Kraftahrzeug sowie die Geschwindigkeit jeweils zwischen dem zugeordneten Satelliten und dem Kraftahrzeug bestimmt. Zusätzlich stellt Satellitennavigationssystem 104 beispielsgemäß Fusionsfilter 105 eine Startposition bzw. Startpositionsinformation bereit, zumindest beim Start bzw. Einschalten des Systems.

Das System umfasst außerdem Fusionsfilter 105. Fusionsfilter 105 stellt im Zuge der gemeinsamen Auswertung der Messdaten von Odometrienavigationssystem 103, von Satellitennavigationssystems 104 und von Trägheitsnavigationssystem 101 einen Fusionsdatensatz 106 bereit. Fusionsdatensatz 106 umfasst beispielsgemäß die Fehlerwerte bzw. die Korrekturen für die unterschiedlichen, erfassten Messdaten bzw. Werte.

Die Messdaten bzw. Werte von Trägheitsnavigationssystem 101 werden nun in einem hierfür vorgesehenen elektronischen Datenspeicher 113 von Fusionsfilter 105 für einen vorgegebenen Zeitraum gespeichert. Trägheitsnavigationssystems 101 stellt dabei gemeinsam mit Strapdown-Algorithmus-Einheit 102 das sog. Basissystem dar, während Odometrienavigationssystem 103 und Satellitennavigationssystem 104 die sog. Korrektursysteme darstellen, deren Werte zur Korrektur der Werte des Basissystems herangezogen werden, sofern sie plausibilisiert wurden. Beispielsgemäß werden die Messdaten bzw. Werte des Basissystems, also die Messdaten bzw. Werte von Trägheitsnavigationssystems 101, für 25 Messepochen gespeichert. Bei Bedarf, d.h., wenn die gespeicherten Messdaten bzw. Werte zu einem anderen Zeitpunkt erfasst wurden als die Messdaten bzw. Werte der Korrektursysteme, werden aus den gespeicherten Messdaten bzw. Werten die benötigten Messdaten bzw. Werte interpoliert. Die Messdaten bzw. Werte der Korrektursysteme, also von Satellitennavigationssystem 104 und von Odometrienavigationssystem 103, werden hingegen nicht gespeichert.

Somit ist sichergestellt, dass stets Werte, die zumindest scheinbar zu einem identischen Zeitpunkt erfasst wurden, dem Vergleich unterworfen werden können.

Von Fusionsfilter 105 bereitgestellter Fusionsdatensatz 106 umfasst beispielsgemäß die mittels der verifizierten Werte der Korrektursysteme bestimmten quantitativen Fehler des Basissystems.

Strapdown-Algorithmus-Einheit 102 korrigiert nun mittels Fusionsdatensatz 106 die Messwerte des Basissystems.

Fusionsdatensatz 106 wird von Fusionsfilter 105 aus den Messdaten bzw. Werten von Odometrienavigationssystem 103, Satellitennavigationssystems 104 und Trägheitsnavigationssystem 101 berechnet.

Fusionsfilter 105 ist beispielsgemäß als Error-State-Space-Kalman Filter ausgebildet ist, also als Kalman-Filter, das insbesondere eine Linearisierung der Werte ausführt und in welchem die quantitativen Fehler der Werte berechnet bzw. geschätzt werden und welches sequentiell arbeitet und dabei die in dem jeweiligen Funktionsschritt der Sequenz verfügbaren Messdaten bzw. Werte.

Fusionsfilter 105 ist so ausgebildet, dass es asynchron die neuesten von Trägheitsnavigationssystem 101, Odometrienavigationssystem 103 und Satellitennavigationssystem 104 verfügbaren Messdaten bzw. Werte erfasst. Beispielsgemäß werden die Messdaten bzw. Werte dabei über Kraftfahrzeugmodelleinheit 107 und Ausrichtungsmodelleinheit 109 geführt.

Kraftfahrzeugmodelleinheit 107 ist so ausgebildet, dass sie aus den Messdaten von Odometrienavigationssystem 103 zumindest die Geschwindigkeit entlang einer ersten Achse, die Geschwindigkeit entlang einer zweiten Achse sowie die Drehrate um eine dritte Achse berechnet und diese Fusionsfilter 105 bereitstellt.

Das System umfasst außerdem Reifenparameterschätzungseinheit 110, welche so ausgebildet ist, dass sie zumindest den Halbmesser, beispielgemäß den dynamischen Halbmesser, aller Räder berechnet und zusätzlich die Schräglaufsteifigkeit und die Schlupfsteifigkeit aller Räder berechnet und diese Kraftfahrzeugmodelleinheit 107 als zusätzliche Eingangsgrößen bereitstellt. Reifenparameterschätzungseinheit 110 ist weiterhin so ausgebildet, dass sie ein im Wesentlichen lineares Reifenmodell zur Berechnung der Reifengrößen verwendet.

Die beispielgemäßen Eingangsgrößen von Reifenparameterschätzungseinheit 110 sind dabei die Raddrehzahlen und den Lenkwinkel beschreibende Messdaten, zumindest teilweise die Ausgangswerte von Strapdown-Algorithmus-Einheit 102 sowie die von Fusionsfilter 105 bestimmten Varianzen.

Das System umfasst außerdem GPS-Fehlererkennungs-und-Plausibilisierungseinheit 111, welche so ausgebildet ist, dass sie beispielgemäß als Eingangsdaten die Messdaten bzw. Werte von Satellitennavigationssystem 104 sowie zumindest teilweise Messdaten bzw. Werte von Strapdown-Algorithmus-Einheit 102 erhält und in ihren Berechnungen berücksichtigt. GPS-Fehlererkennungs-und-Plausibilisierungseinheit 111 prüft die Messdaten bzw. Werte gegen ein an Satellitennavigationssystem 104 angepasstes stochastisches Modell. Sofern die Messdaten bzw. Werte im Rahmen einer dem Rauschen Rechnung tragenden Toleranz dem Modell entsprechen, werden sie verifiziert bzw. bestätigt.

Dabei ist GPS-Fehlererkennungs-und-Plausibilisierungseinheit 111 zusätzlich mit Fusionsfilter 105 auf Datenebene verbunden und übermittelt die plausibilisierten Messdaten bzw. Werte an Fusionsfilter 105. GPS-Fehlererkennungs-und-Plausibilisierungseinheit 111 ist beispielhaft so ausgebildet, dass sie ein Verfahren zum Auswählen eines Satelliten u.a. mittels der folgenden Verfahrensschritte durchführt:

- Messen von Positionsdaten des Kraftfahrzeugs gegenüber dem Satelliten basierend auf den Sensorsignalen von Satellitennavigationssystems 104,
- Bestimmen von zu den basierend auf den Sensorsignalen von Satellitennavigationssystems 104 bestimmten Positionsdaten redundanten Referenzpositionsdaten des Kraftfahrzeugs,
- Auswählen des Satelliten, wenn eine Gegenüberstellung der Positionsdaten und der Referenzpositionsdaten einer vorbestimmten Bedingung genügt,
- wobei zur Gegenüberstellung der Positionsdaten und der Referenzpositionsdaten eine Differenz zwischen den Positionsdaten und den Referenzpositionsdaten gebildet wird,
- wobei die vorbestimmte Bedingung eine maximal zulässige Abweichung der Positionsdaten von den Referenzpositionsdaten ist,
- wobei die maximal zulässige Abweichung von einer Standardabweichung abhängig ist, die basierend auf einer Summe aus einer Referenzvarianz für die Referenzpositionsdaten und einer Messvarianz für die Positionsdaten berechnet wird und
- wobei die maximal zulässige Abweichung einem Vielfachen der Standardabweichung derart entspricht, dass eine Wahrscheinlichkeit, dass die Positionsdaten in ein von der Standardabweichung abhängiges Streuintervall fallen, einen vorbestimmten Schwellwert unterschreitet.

Das System weist außerdem Stillstandserkennungseinheit 108 auf, welche so ausgebildet ist, dass sie einen Stillstand des Kraftfahrzeugs erkennen kann und im Falle eines erkannten Stillstands des Kraftfahrzeugs zumindest Fusionsfilter 5 Informationen aus einem Stillstandsmodell bereitstellt. Die Informationen aus einem Stillstandsmodell beschreiben dabei, dass die Drehraten um alle drei Achsen den Wert Null aufweisen und die Geschwindigkeiten entlang aller drei Achsen den Wert Null aufweisen. Stillstandserkennungseinheit 108 ist dabei beispielgemäß so ausgebildet, dass sie als Eingangsdaten die Sensorsignale der Raddrehzahlsensoren von Odometrienavigationssystem 103 sowie die Sensorsignale von Trägheitsnavigationssystem 101 nutzt.

Das System verwendet beispielgemäß eine erste Gruppe von Messdaten bzw. Werten, die sich auf ein Kraftfahrzeugkoordinatensystem beziehen und zusätzlich eine zweite Gruppe von Messdaten bzw. Werten, die sich auf ein Weltkoordinatensystem beziehen, wobei das Weltkoordinatensystem zur Beschreibung der Ausrichtung und von dynamischen Größen des Kraftfahrzeugs verwendet wird. Mittels Ausrichtungsmodelleinheit 109 wird ein Ausrichtungswinkel zwischen dem Kraftfahrzeugkoordinatensystem und dem Weltkoordinatensystem bestimmt.

Der von Ausrichtungsmodelleinheit 109 bestimmte Ausrichtungswinkel zwischen dem Kraftfahrzeugkoordinatensystem und dem Weltkoordinatensystem wird dabei bestimmt auf Basis folgender physikalischer Größen:

- der vektoriellen Geschwindigkeit bezüglich des Weltkoordinatensystems,
- der vektoriellen Geschwindigkeit bezüglich des Kraftfahrzeugkoordinatensystems,
- des Lenkwinkels und
- der jeweiligen quantitativen Fehler der die genannten Größen beschreibenden Messdaten bzw. Werte.

Ausrichtungsmodelleinheit 109 greift dabei auf sämtliche der Ausgangsdaten von Strapdown-Algorithmus-Einheit 102 zurück.

Ausrichtungsmodelleinheit 109 ist beispielgemäß so ausgebildet, dass sie zusätzlich zu dem Ausrichtungswinkel noch eine Information über die Datenqualität des Ausrichtungswinkels in Form einer Varianz berechnet und Fusionsfilter 105 bereitstellt.

Fusionsfilter 105 verwendet den Ausrichtungswinkel und die Varianz des Ausrichtungswinkels bei seinen Berechnungen, welche er über Fusionsdatensatz 106 an Strapdown-Algorithmus-Einheit 102 weiterleitet.

Fusionsfilter 105 erfasst also die Messdaten von Trägheitsnavigationssystem 101, dem Basissystem, sowie von Odometrienavigationssystem 103 und von Satellitennavigationssystem 104, den Korrektursystemen. Das erfindungsgemäße Plausibilisierungsmodul ist beispielgemäß unabhängig von Fusionsfilter 105. Fusionsfilter 105 führt daher paarweise Vergleiche der Werte von drei jeweils identischen physikalischen Größen durch. Beispielsgemäß handelt es sich bei den physikalischen Größen um die Position und um die Geschwindigkeit des Kraftfahrzeugs, die, wie beschrieben, jeweils direkt bzw. indirekt in den Messdaten von Trägheitsnavigationssystem 101, Odometrienavigationssystem 103 und von Satellitennavigationssystem 104 enthalten sind. Die paarweisen Vergleiche finden dabei beispielsgemäß jeweils in der sog. Rohdatenform statt, d.h., es werden die Rohdaten der jeweiligen Sensorsysteme verglichen. Sofern die Rohdaten einen zu vergleichenden Wert nur indirekt beschreiben, so wird diesem Umstand über ein entsprechendes stochastisches Modell Rechnung getragen. Jeweils bei einer Nicht-Übereinstimmung während des Vergleichs wird ein dem jeweiligen Wert zugeordneter Gütezähler um den Stellwert "1" erhöht. Beispielsgemäß stammen die dem Vergleich unterworfenen Werte von einem Zeitpunkt, an dem am linken Vorderrad übermäßiger Radschlupf an den aufgetreten ist. Die Werte der Messdaten von Odometrienavigationssystem 103 weisen somit hinsichtlich des linken Vorderrads einen quantitativen Fehler auf. Bei dem Vergleich gegen die entsprechenden Werte von Trägheitsnavigationssystem 101 und gegen die von Odometrienavigationssystem 103 ermittelten Geschwindigkeiten der anderen drei Fahrzeugräder wird daher jeweils auf Nicht-Übereinstimmung erkannt und der Gütezähler der entsprechenden Werte jeweils um den Stellwert "1" erhöht. Entsprechend weist der Gütezähler des Werts für die Geschwindigkeit des linken Vorderrads von Odometrienavigationssystem 103 schließlich den Gütewert "3" auf, wohingegen die Gütezähler der Werte für die Geschwindigkeiten der restlichen drei Fahrzeugräder von Odometrienavigationssystem 103 jeweils den Wert "1" aufweisen, ebenso wie der Gütezähler für die Geschwindigkeit des Gesamtfahrzeugs von Trägheitsnavigationssystem 101 auch den Gütewert "1" aufweist.

Da beispielsgemäß der Verifikationsschwellenwert bei "2" liegt, werden die Werte für die Geschwindigkeit für das Gesamtfahrzeug von Trägheitsnavigationssystem 101 und für die Geschwindigkeit für die restlichen drei Fahrzeugräder von Satellitennavigationssystem 104 verifiziert und von Fusionsfilter 105 zur Erstellung von Fusionsdatensatz 106 herangezogen. Die Werte für das linke Vorderrad von Odometrienavigationssystem 103 werden hingegen nicht verifiziert und verworfen.

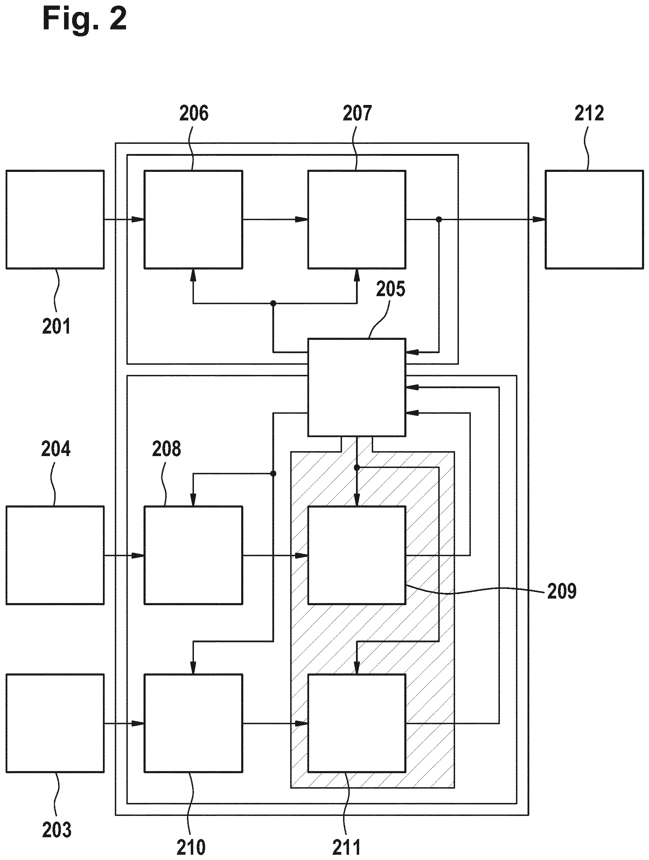

Fig. 2 zeigt beispielhaft eine weitere mögliche Ausbildungsform eines erfindungsgemäßen Systems, welches ebenfalls zur Positionsbestimmung ausgebildet ist, in einem Kraftfahrzeug (nicht dargestellt). Das System umfasst beispielsgemäß Trägheitsnavigationssystem 201, Satellitennavigationssystem 204 und Odometrienavigationssystem 203 als unterschiedliche Sensorsysteme. Trägheitsnavigationssystem 201, Satellitennavigationssystem 204 und Odometrienavigationssystem 203 geben Messdaten, die direkt bzw. indirekt Werte von physikalischen Größen, nämlich Werte einer Position, einer Geschwindigkeit, einer Beschleunigung, einer Ausrichtung, einer Gierrate bzw. einer Gierbeschleunigung beschreiben, in Form von vorverarbeiteten Rohdaten an Fusionsfilter 205 aus. Die Ausgabe der Messdaten erfolgt dabei über einen Fahrzeugdatenbus, beispielsgemäß über einen sog. CAN-Bus. Beispielsgemäß gibt Satellitennavigationssystem 204 seine Messdaten in Rohdatenform an aus.

Als zentrales Element bei einer Positionsbestimmung des Kraftfahrzeugs wird Trägheitsnavigationssystem 201, bei dem es sich um eine sog. MEMS-IMU (*Micro-Electro-Mechanical-System-Inertial Measurement Unit*) handelt in Kombination mit Strapdown-Algorithmus-Einheit 207 verwendet, da dieses als fehlerfrei angenommen wird, d.h., es wird angenommen, dass die Werte von Trägheitsnavigationssystem 201 stets ihrem stochastischen Modell entsprechen, dass sie lediglich Rauscheinflüsse aufweisen und somit frei von äußeren bzw. zufälligen Fehlern bzw. Störungen sind.

Das Rauschen sowie verbleibende, nicht modellierte Fehler von Trägheitsnavigationssystem 201, wie z.B. Nichtlinearität, werden dabei über den Messbereich als mittelwertfrei, stationär und normalverteilt (sog. Gaußsches Weißes Rauschen) angenommen.

Trägheitsnavigationssystem 201 umfasst drei zueinander jeweils orthogonal erfassende Drehratensensoren und drei zueinander jeweils orthogonal erfassende Beschleunigungssensoren. Satellitennavigationssystem 204 umfasst einen GPS-Empfänger, welcher über die Satellitensignallaufzeit zunächst Entfernungsmessungen zu den empfangbaren GPS-Satelliten vornimmt und außerdem aus der Änderung der Satellitensignallaufzeit sowie zusätzlich aus der Änderung der Anzahl der Wellenlängen der Satellitensignale zwischen Sender- und Empfängerantenne eine vom Kraftfahrzeug zurückgelegte Wegstrecke bestimmt. Odometrienavigationssystem 203 umfasst jeweils einen Raddrehzahlsensor an jedem Rad des Kraftfahrzeugs sowie einen Lenwinkelsensor. Die Raddrehzahlsensoren bestimmen jeweils die Raddrehgschwindigkeit des ihnen zugeordneten Rads und der Lenkwinkelsensor bestimmt den eingeschlagenen Lenkwinkel.

Trägheitsnavigationssystem 201 gibt seine Messdaten bzw. Werte an Vorverarbeitungseinheit 206 von Trägheitsnavigationssystem 201 aus. Vorverarbeitungseinheit 206 korrigiert nun die Messdaten bzw. Werte mittels Korrekturwerten, die Vorverarbeitungseinheit 206 von Fusionsfilter 205 erhält. Die solcherart korrigierten Messdaten bzw. Werte werden nun weitergeführt an Strapdown-Algorithmus-Einheit 207. Da es sich beispielsgemäß bei Vorverarbeitungseinheit 206, Strapdown-Algorithmus-Einheit 207 und Fusionsfilter 205 um Softwaremodule handelt, die in unterschiedlichen Partitionen auf ein und demselben Prozessor ausgeführt werden, können die korrigierten Messwerte bzw. Sensorsignale vergleichsweise einfach und schnell weitergeführt werden.

Strapdown-Algorithmus-Einheit 207 nimmt anhand der korrigierten Messdaten bzw. Werte von Vorverarbeitungseinheit 206 nun eine Positionsbestimmung vor. Diese Positionsbestimmung ist dabei eine sog. Koppelnavigation auf Basis von Trägheitsnavigationssystem 201. Dazu werden die von Vorverarbeitungseinheit 206 ausgegebenen korrigierten Messdaten bzw. Werte fortlaufend über die Zeit aufintegriert bzw. aufaddiert. Strapdown-Algorithmus-Einheit 207 kompensiert weiterhin eine auf Trägheitsnavigationssystem 201 wirkende Coriolisbeschleunigung sowie die Erdbeschleunigung, die sog. Transportdrehrate und die Erddrehrate, welche sich jeweils auf die Messdaten von Trägheitsnavigationssystem 201 auswirken können. Das System weist weiterhin eine sog. Strapdown-Algorithmus-Einheit 207 auf, in welchem ein sog. Strapdown-Algorithmus durchgeführt wird, mittels dessen die Messwerte von Trägheitssensornavigationssystem 201 u.a. in Geschwindigkeitsdaten und Positionsdaten umgerechnet werden. Dazu werden die Sensorsignale von Trägheitssensornavigationssystem 201, welche naturgemäß Beschleunigungen und Drehraten beschreiben, einmal bzw. zweimal über die Zeit integriert. Auch eine Ausrichtung des Kraftfahrzeugs wird mittels einmaliger Integration der entsprechenden Sensorsignale von Trägheitssensornavigationssystem 101 über die Zeit bestimmt. Dies ermöglicht eine Fortschreibung einer zuvor bekannten Position sowie eine Fortschreibung einer zuvor bekannten Ausrichtung des Kraftfahrzeugs.

Strapdown-Algorithmus-Weiterhin korrigiert Strapdown-Algorithmus-Einheit 207 auch die bestimmte Position, die bestimmte Geschwindigkeit und die bestimmte Ausrichtung mittels entsprechender Korrekturwerte von Fusionsfilter 205. Fusionsfilter 205 führt in diesem Beispiel die Korrektur also nur mittelbar über Strapdown-Algorithmus-Einheit 207 aus. Die von Strapdown-Algorithmus-Einheit 207 bestimmten und korrigierten Werte bzw. physikalischen Größen, also die Position, die Geschwindigkeit, die Beschleunigung, die Ausrichtung, die Drehrate und die Drehbeschleunigung des Kraftfahrzeugs werden nun an Ausgabemodul 212 und an Fusionsfilter 205 geführt.

Der von Strapdown-Algorithmus-Einheit 207 ausgeführte sog. Strapdown-Algorithmus ist dabei rechnerisch nur wenig komplex und lässt sich daher als echtzeitfähiges Basissystem realisieren. Er stellt einen Verfahrensablauf zur Integration der Messdaten bzw. Werte von Trägheitsnavigationssystem 201 zu Geschwindigkeit, Ausrichtung und Position dar und beinhaltet keine Filterung, so dass sich eine annähernd konstante Latenzzeit und Gruppenlaufzeit ergibt.

Der Begriff Basissystem beschreibt dabei dasjenige Sensorsystem, dessen Messdaten bzw. Werte mittels der Messdaten bzw. Werte der anderen Sensorsysteme, der sog. Korrektursysteme, korrigiert werden. Beispielsgemäß handelt es sich bei den Korrektursystemen um Odometrienavigationssystem 203 und um Satellitennavigationssystem 204.

Trägheitsnavigationssystem 201, Vorverarbeitungseinheit 206 von Trägheitsnavigationssystem 201 und Strapdown-Algorithmus-Einheit 207 bilden beispielsgemäß zusammen das sog.

Basissystem, zu welchem zusätzlich anteilig auch Fusionsfilter 205 gezählt wird.

Ausgabemodul 212 gibt die von Strapdown-Algorithmus-Einheit 207 bestimmten und korrigierten Werte der physikalischen Größen an beliebige weitere Systeme des Kraftfahrzeugs weiter.

Die von Satellitennavigationssystem 204 erfassten Messdaten werden beispielsgemäß zunächst an Vorverarbeitungseinheit 208 von Satellitennavigationssystem 204 weitergeführt. Vorverarbeitungseinheit 208 korrigiert nun mittels von Fusionsfilter 205 erhaltenen Fehlerwerten bzw. Korrekturen die Messdaten, welche sog. GPS-Rohdaten sind, von Satellitennavigationssystem 204 und berechnet weiterhin die Bahndaten der GPS-Satelliten, von denen GPS-Signale empfangen werden. Außerdem bestimmt Satellitennavigationssystem 204 eine relative Geschwindigkeit des Kraftfahrzeugs zu den GPS-Satelliten, von denen GPS-Signale empfangen werden. Weiterhin korrigiert Vorverarbeitungseinheit 208 einen in den Messdaten enthaltenen Zeitfehler einer Empfängeruhr von Satellitennavigationssystem 204, welcher durch eine Drift der Empfängeruhr entsteht, sowie mittels eines Korrekturmodells die durch atmosphärische Einwirkungen auf die von den GPS-Satelliten gesendeten GPS-Signale verursachten Veränderungen in der Signallaufzeit und dem Signalweg. Auch die Korrektur des Zeitfehlers sowie der atmosphärischen Einwirkungen erfolgen mittels von Fusionsfilter 205 erhaltenen Korrekturwerten.

Satellitennavigationssystem 204 ist weiterhin Plausibilisierungsmodul 209 zugeordnet, welches die von Vorverarbeitungseinheit 208 ausgegebenen Werte der physikalischen Größen, also Werte der Position und der Geschwindigkeit des Kraftfahrzeugs beschreibende GPS-Rohdaten, plausibilisiert. Für die Plausibilisierung wird nun auf das erfindungsgemäße Konzept zur Plausibilisierung bzw. Verifizierung zurückgegriffen. Dieses Konzept sieht die Nutzung weiterer vorhandener Redundanzen zur Plausibilisierung der von Satellitennavigationssystem 204 erfassten bzw. bestimmten Werte vor. Zunächst werden die jeweiligen Messdaten bzw. Werte gegen ein ihnen zugeordnetes, sensorindividuelles Modell abgeglichen, welches Messunsicherheiten wie Rauscheinflüsse berücksichtigt. Dazu werden die GPS-Rohdaten aller empfangbaren GPS-Satelliten untereinander verglichen. Beispielsgemäß werden vom Fahrzeug fünf GPS-Satelliten empfangen. Sofern die Messdaten bzw. Werte dem Modell innerhalb der gegebenen Grenzwerte bzw. Toleranzbereiche entsprechen, erfolgt hier eine erste Verifizierung und die solcherart verifizierten Werte werden weiterverarbeitet. Anschließend werden die mittels Trägheitsnavigationssystem 201 bestimmten Messdaten bzw. Werte genutzt, um die Werte von Satellitennavigationssystem 204 zu plausibilisieren bzw. zu plausibilisieren. Sofern eine Verifizierung bzw. Plausibilisierung dieser Messdaten nicht erfolgen kann, werden die entsprechenden Messdaten verworfen und nicht weiter verarbeitet. Die Plausibilisierung erfolgt dabei jeweils über einen paarweisen Vergleich der zu plausibilisierenden Werte, d.h. der von Satellitennavigationssystem 204 bestimmten Position und Geschwindigkeit, mit den von Trägheitsnavigationssystem 201 bestimmten Positionen und Geschwindigkeiten. Sofern bei einem paarweisen Vergleich auf Nicht-Übereinstimmung erkannt wird, wird ein dem jeweiligen Wert zugeordneter Gütezähler um "1" erhöht. Sofern der Gütezähler den Wert "2" nicht überschreitet, wird der jeweils zugeordnete Wert schließlich plausibilisiert. Diese paarweisen Vergleiche erfolgen sowohl für die von Satellitennavigationssystem 204 bestimmte Position als auch für die von Satellitennavigationssystem 204 bestimmte Geschwindigkeit. Die von Trägheitsnavigationssystem 201 bestimmten und für die paarweisen Vergleiche benötigten Positionen und Geschwindigkeiten werden Plausibilisierungsmodul 209 dabei von Fusionsfilter 205 zugeführt. Die von Plausibilisierungsmodul 209 verifizierten Messdaten bzw. Werte werden dann an Fusionsfilter 205 ausgegeben.

Das System umfasst weiterhin Vorverarbeitungseinheit 210 von Odometrienavigationssystem 203, welche über den CAN-Bus die von Odometrienavigationssystem 203 erfassten Messdaten bzw. Werte erhält. Die erfassten Messdaten bzw. Werte sind in diesem Fall die Messdaten bzw. Werte der einzelnen Raddrehzahlsensoren sowie die Messdaten bzw. Werte des Lenkwinkelsensors. Vorverarbeitungseinheit 210 bestimmt nun aus den von Odometrienavigationssystem 203 ausgegebenen Messdaten bzw. Werten gemäß einem sog. Koppelnavigationsverfahren die Position und die Ausrichtung des Kraftfahrzeugs im Kraftfahrzeugkoordinatensystem. Außerdem korrigiert Vorverarbeitungseinheit 210 die von Odometrienavigationssystem 203 erhaltenen Messdaten bzw. Werte mittels von Fusionsfilter 205 erhaltenen Korrekturwerten.

Odometrienavigationssystem 203 ist weiterhin Plausibilisierungsmodul 211 zugeordnet, welches die von Vorverarbeitungseinheit 210 beispielsgemäß in Rohdatenform ausgegebenen Messdaten bzw. Werte, also die Position, die Ausrichtung, die Geschwindigkeit, die Beschleunigung, die Drehrate und die Drehbeschleunigung des Kraftfahrzeugs plausibilisiert. Da die Störungen der Messdaten bzw. Werte von Odometrienavigationssystem 203 häufig zufällige, umweltbedingte Störungen sind, die nicht Weißem Rauschen entsprechen, z.B. bei vergleichsweise großem Radschlupf an zumindest einem der Fahrzeugräder, wird auch hier das erfindungsgemäße Konzept zur Verifizierung bzw. Plausibilisierung verwendet, nämlich die Nutzung möglichst vieler Redundanzen. Deshalb werden die mittels Trägheitsnavigationssystem 201 bestimmten Messdaten bzw. Werte genutzt, um die Messdaten bzw. Werte von Odometrienavigationssystem 203 zu plausibilisieren. Zunächst werden auch hier aber die Messdaten bzw. Werte im Rahmen ihres ihnen zugeordneten, sensorindividuellen Modells verglichen, welches Messunsicherheiten wie Rauscheinflüsse berücksichtigt. Beispielsgemäß werden Sensorrohdaten der den vier Fahrzeugrädern zugeordneten Raddrehzahlsensoren über das Modell untereinander verglichen. Sofern die Messdaten bzw. Werte sich im Rahmen des Modells innerhalb der gegebenen Grenzwerte bzw. Toleranzbereiche entsprechen, erfolgt ein weiterer Vergleich gegen die entsprechenden Messdaten bzw. Werte von Trägheitsnavigationssystem 201. Sofern bei einem paarweisen Vergleich auf Nicht-Übereinstimmung erkannt wird, wird ein den am Vergleich beteiligten Werten zugeordneter Gütezähler um den Wert "1" erhöht. Schließlich werden alle Werte verifiziert, deren Gütezähler den beispielsgemäßen Güteschwellenwert "2" nicht überschreitet. Die verifizierten Werte werden dann an Fusionsfilter 205 weitergeführt. Sofern eine Verifizierung dieser Messdaten bzw. Werte nicht erfolgen kann, werden die entsprechenden Messdaten bzw. Werte verworfen und nicht weiter verarbeitet.

Die Einzelmodule Plausibilisierungsmodul 209 und Plausibilisierungsmodul 211 bilden dabei unter anteiliger Einbeziehung von Fusionsfilter 205 jeweils ein unabhängiges Plausibilisierungsmodul im Sinne der Erfindung.

Fusionsfilter 205 ist beispielsgemäß als Error-State-Space-Kalman-Filter ausgebildet. Die Hauptaufgabe von Fusionsfilter 205 ist es beispielsgemäß, die Messdaten bzw. Werte des Basissystems, also von Trägheitsnavigationssystem 201, mittels aus Messdaten bzw. Werten von Odometrienavigationssystem 203 und Satellitennavigationssystem 204, welche die Korrektursysteme darstellen, zu korrigieren, bzw. entsprechende Korrekturwerte an Strapdown-Algorithmus-Einheit 207 auszugeben. Dazu werden von Fusionsfilter 205 anhand der Messwerte von Odometrienavigationssystem 203 die radindividuellen Geschwindigkeiten, des Kraftfahrzeugs im Fahrzeugkoordinatensystem bestimmt. Außerdem werden von Fusionsfilter 205 anhand der Messwerte von Satellitennavigationssystem 204 die Position und die Geschwindigkeit im GPS-Koordinatensystem bestimmt, wobei das GPS-Koordinatensystem ein sog. Weltkoordinatensystem ist.

Da Trägheitsnavigationssystem 201, welches beispielsgemäß das Basissystem darstellt, als frei von zufälligen Fehlern und äußeren Störungen angenommen wird, unterliegen die Messdaten bzw. Werte von Trägheitsnavigationssystem 201 ausschließlich Weißem Rauschen. Aufgrund der unterschiedlichen Signalausgabeverzüge von Trägheitsnavigationssystem 201, Odometrienavigationssystem 203 und Satellitennavigationssystem 204 werden die Messdaten bzw. Werte von Trägheitsnavigationssystem 201 über einen Zeitraum von 25 Messepochen in einem nicht dargestellten elektronischen Datenspeicher gespeichert. Somit ist sichergestellt, dass sowohl für die Messdaten bzw. Werte von Odometrienavigationssystem 203 als auch von Satellitennavigationssystem 204 stets Messdaten bzw. Werte von Trägheitsnavigationssystem 201 zum Vergleichen vorliegen, die zu einem identischen Zeitpunkt erfasst wurden.

Da es sich bei Fusionsfilter 205 um einen sog. Error-State-Space-Kalman-Filter handelt, werden ausschließlich die quantitativen Fehler der Werte bestimmt und entsprechende Korrekturen ausgeführt. Dies vereinfacht und beschleunigt die von Fusionsfilter 205 vorgenommene Fusion der Werte von Trägheitsnavigationssystem 201, Odometrienavigationssystem 203 und Satellitennavigationssystem 204 zu einem gemeinsamen Fusionsdatensatz. Somit wird eine echtzeitfähige Positionsbestimmung und Korrektur der Positionsbestimmung ermöglicht.

Das in Fig. 2 dargestellte System stellt einen sog. virtuellen Sensor dar, wobei Trägheitsnavigationssystem 201, Odometrienavigationssystem 203 und Satellitennavigationssystem 204 jedoch nicht Bestandteile des virtuellen Sensors sind. Ein virtueller Sensor ist ein System, welches unabhängig von der Art der eingebundenen Sensorsysteme - hier also Trägheitsnavigationssystem 201, Odometrienavigationssystem 203 und Satellitennavigationssystem 204 - stets die gleichen Ausgangsdaten bzw. Ausgaben erzeugt. Anhand der Ausgangsdaten bzw. Ausgaben ist nicht ersichtlich, welche Sensorsysteme in das System eingebunden sind.

Gemäß einem weiteren, nicht dargestellten Ausführungsbeispiel, wird ein Trägheitsnavigationssystem, welches das zu korrigierende Basissystem darstellt, als von äußeren Störungen unbeeinflusst angenommen, während die Korrektursysteme, ein Odometrienavigationssystem und ein Satellitennavigationssystem, von zufälligen, umweltbedingten Störungen betroffen sind. Solange diese Störungen bezüglich ihrer Größe und Häufigkeit ihrer Modellierung Weißem Rauschen entsprechen, entsteht beispielsgemäß keine Einschränkung bei der Korrektur des Basissystems, der Fusion der Werte zu einem Fusionsdatensatz. Da dies für die verwendeten Korrektursysteme im Allgemeinen jedoch nicht gegeben ist, z.B. bei Mehrwegeausbreitung bei GPS oder bei großem Schlupf eines einzelnen Rades, wird das erfindungsgemäße Verfahren angewandt.

Aufgrund der Anforderung an das Plausibilisierungsverfahren, die Entdeckungswahrscheinlichkeit und die Entdeckungsgeschwindigkeit von quantitativen Fehlern der Werte zu maximieren, werden beispielsgemäß möglichst viele der verfügbaren Redundanzen für das erfindungsgemäße Verfahren herangezogen.

Da die Güte der Korrekturen des Fusionsfilters von allen Messdaten bzw. Werten profitiert, die ihrem stochastischen Modell entsprechen, wird das erfindungsgemäße Verfahren beispielsgemäß nur bei Abweichungen von Messdaten bzw. Werten von ihrem stochastischen Modell ausgeführt und ansonsten dem Fusionsfilter die größtmögliche Anzahl an Messungen unverändert zugeführt.

Im Folgenden wird beispielhaft der Abgleich von Werten eines Satellitennavigationssystems gegen ihr sensorindividuelles stochastisches Modell beschrieben. Die Messdaten des Satellitennavigationssystems sind dabei beispielsgemäß sog. GPS-Codemessungen. Die zu plausibilisierenden Werte für die Codemessungen sind die Differenzen zwischen geometrisch berechneten und gemessenen sog. Pseudoranges $\Delta\rho$ (auch bekannt als sog. Reduzierte Beobachtung). Die Pseudoranges $\Delta\rho$ beschreiben die Differenz zwischen dem auf folgenden Wegen bestimmten Abstand zwischen Empfängerantenne und Satellit:

1. geometrisch aus Eigenposition und Satellitenposition,
2. Laufzeitmessung (Pseudorange).

Daher berechnet sich die maximale für den Vergleich des Basissystems mit einer Korrekturmessung zu erwartende Standardabweichung $\sigma_{PSR,Mess}$ dieser physikalischen Größe aus dem "Positionsfehler" mit Standardabweichung $\sigma_{Pos}$ und dem "Empfängeruhrfehler in der Einheit $m$" mit Standardabweichung $\sigma_{Clk}$, sowie aus dem Messrauschen $\sigma_{PSR}$ der Pseudorange-Messung. Es gilt also:

$$\sigma_{PSR,Mess}^2 = \sigma_{Pos}^2 + \sigma_{Clk}^2 + \sigma_{PSR}^2$$

Eine dreidimensionale Projektion des Positionsfehlers auf die Sichtlinie zum Satelliten wird beispielsgemäß nicht durchgeführt, um eine Kopplung der Fahrzeugausrichtung mit dem Schwellwert des stochastischen Modells, dessen Überschreiten zum Verwerfen des entsprechenden Werts führt, zu vermeiden. Eine solche Kopplung führt insbesondere in der häufig im Stillstand stattfindenden Initialisierungsphase des Systems zu fälschlichen Fehlerdetektionen durch die in diesem Fall noch undefinierte Ausrichtung.

Daher wird die Positionsunsicherheit $\sigma_{Pos}$, also die Varianz der Position als Worst-Case-Abweichung als Quadratsumme der Positionsunsicherheiten in den drei im Systemmodell des Fusionsfilters verwendeten fahrzeugfesten X-, Y- und Z-Achsen berechnet:

$$\sigma_{Pos}^2 = \sigma_E^2 + \sigma_N^2 + \sigma_U^2$$

Die $n\cdot\sigma$-Umgebung, und damit der Schwellwert $\xi_{IMU,Code} = n\cdot\sigma_{PSR,Mess}$ stochastischen Modells, ergibt sich daraus als:

$$\xi_{IMU,Code} = n \cdot \sigma_{PSR,Mess}$$

Die Wahl des Parameters $n$ beeinflusst damit die noch als Weißes Rauschen akzeptierte maximale Abweichung der verglichenen Werte und legt somit auch die Irrtumswahrscheinlichkeit der Prüfung fest. Die Bedeutung des Parameters $n$ für die Funktion des Fusionsfilters ist die Abstimmung auf den optimalen Kompromiss zwischen höherer Verfügbarkeit von Messdaten ($n$ größer) und stärkerer Fehlerunterdrückung ($n$ kleiner). Der daraus resultierende Vergleich bewertet einen Wert als unplausibel, falls

$$\Delta\rho > \xi_{IMU,Code}.$$

Falls der Abgleich mit dem stochastischen Modell einen Wert als unplausibel kategorisiert hat, so wird dieser nun einem paarweisen Vergleich mit Werten von anderen Pseudorange-Messungen der gleichen Messepoche unterworfen. Dabei wird zugrunde gelegt, dass ein in $\Delta\rho_n$ beobachtbarer Positionsfehler geometrisch bedingte Korrelationen in allen weiteren zu seinem Ortsvektor nicht-orthogonalen Positionsfehlern $\Delta\rho_m$, $m{\neq}n$, besitzt. Da eine einzelne beobachtete Nicht-Übereinstimmung hierbei den fehlerhaften Wert nicht eindeutig als solchen identifiziert, werden alle verfügbaren Satelliten gegeneinander geprüft. Beispielsgemäß wird hierbei der Abstand zweier Satelliten zueinander einerseits als $l_{Eph}$ aus den als exakt angenommenen Umlaufbahnen, andererseits als $l_{Mess}$ mittels des Cosinussatzes aus dem Differenzwinkel der Ortsvektoren zu den Satelliten $\alpha$ und den Pseudorange-Messungen berechnet:

$$l_{Mess}^2 = \rho_m^2 + \rho_n^2 - 2 \cdot \rho_m \cdot \rho_n \cdot \cos(\alpha)$$

Da die Koordinaten der Satelliten und des Fahrzeugs und damit auch die Vektoren dazwischen bekannt sind, vereinfacht sich der Term $\rho_m \cdot \rho_n \cdot \cos(\alpha)$ zum Skalarprodukt der Vektoren zwischen Empfängerantenne und Satelliten:

$$\rho_m \cdot \rho_n \cdot \cos(\alpha) = (\vec{r}_m \cdot \vec{r}_n) = \rho_m \cdot \rho_n \cdot (\vec{e}_m \cdot \vec{e}_n)$$

mit $\vec{e}_m$, $\vec{e}_n$ als Einheits-Ortsvektoren von der Empfängerantenne in Richtung der Satelliten. Damit ergibt sich die durch Messdaten ermittelte Strecke zwischen zwei Satelliten als:

$$l_{Mess} = \sqrt{\rho_m^2 + \rho_n^2 - 2 \cdot \rho_m \cdot \rho_n \cdot (\vec{e}_m \cdot \vec{e}_n)}$$

Es wird dabei beispielsgemäß weiterhin die Annahme getroffen, dass der Positionsfehler des verwendeten Strapdown-Algorithmus vernachlässigbar klein gegenüber der gesamten Länge einer Pseudorange (im Schnitt ca. 22.000 km) ist und damit der Sichtwinkelfehler ebenso vernachlässigbar klein ist.

Die aus den Umlaufbahnen berechnete Strecke zwischen zwei Satelliten ergibt sich aus dem Betrag der vektoriellen Differenz der Satellitenpositionen:

$$l_{Eph} = \left\| \vec{r}_{m,Eph} - \vec{r}_{n,Eph} \right\|$$

Die Längendifferenz $\Delta l$ des Satellitenabstandes aus beiden Berechnungen dient dabei als erste Bewertungsgröße eines stochastischen Modells:

$$\Delta l = \left| l_{Mess} - l_{Eph} \right|$$

Aus der Gaußschen Fehlerfortpflanzung des Rauschens der Pseudoranges $\sigma_m^2$ und $\sigma_n^2$ sowie der Unsicherheit der Umlaufbahnen $\sigma_l$ ergibt sich für die Standardabweichung $\sigma_l$ von $\Delta l$:

$$\sigma_{\Delta l} = \sqrt{\left( \frac{\rho_m - \rho_n \cdot (\vec{e}_m \cdot \bullet \vec{e}_n)}{l_{Mess}} \right)^2 \cdot \sigma_m^2 + \left( \frac{\rho_n - \rho_m \cdot (\vec{e}_m \cdot \bullet \vec{e}_n)}{l_{Mess}} \right)^2 \cdot \sigma_n^2 + \sigma_{Eph}^2}$$

Der Fehler der Umlaufbahnen wird hierbei als vernachlässigbar angenommen, so dass sich für $l_{Eph}$ eine Varianz von $\sigma_{Eph}^2 = 0$ ergibt. Der Schwellwert $\xi_{Code,Code}$, bei dessen Überschreiten der entsprechende Wert verworfen wird, berechnet sich als:

$$\xi_{Code,Code} = n \cdot \sigma_{\Delta l}$$

Geometrisch bedingte, unterschiedlich starke Auswirkungen von Pseudorange-Fehlern auf die Bewertungsgröße $\Delta l$ werden durch die Schwellwertberechnung berücksichtigt und kompensiert, womit eine konstellationsunabhängige Fehlersensitivität der Überprüfung gegeben ist. Mathematisch kritische Konstellationen in Bezug auf Fehlersensitivität und Singularitäten sind:

- Eine kritische, für kleine Fehler nicht kompensierbare Sensitivität für eine Pseudorange-Messung eines Satelliten wäre gegeben, falls von einem ersten Satelliten aus gesehen der Winkel zwischen den Ortsvektoren zur Empfängerantenne und zu einem zweiten Satelliten 90° betragen würde und gleichzeitig der Abstand zum anderen Satelliten sehr viel größer als der Fehler der Messdaten wäre. Diese Konstellation ist aufgrund der annähernd kreisförmigen Umlaufbahnen der Satelliten geometrisch nicht möglich.
- Eine Singularität wäre gegeben, falls $\rho_m = \rho_n$ und $\alpha = 0$. Dies bedeutet, dass sich zwei Satelliten am exakt gleichen Ort befinden würden, was wiederum auch nicht möglich ist.

Auf Nicht-Übereinstimmung unter Berücksichtigung der Messunschärfe wird erkannt, falls die Bedingung

$$\Delta l > \xi_{Code,Code}$$

erfüllt wird. Effektiv wird somit die aus der bekannten Umlaufbahnen bestimmte Entfernung der zum Vergleich herangezogenen Satelliten mit der aus den Messdaten bestimmten Entfernung der Satelliten unter Berücksichtigung der Messunschärfe verglichen. Diese Prüfung wird für alle Paarungen von Satelliten, von denen Messdaten vorliegen, durchgeführt. Hierbei wird für die Messdaten bzw. Werte jedes Satelliten satellitenindividuell ein Gütezähler um einen vorgegebenen Stellwert erhöht.
Dabei wird der Gütezähler bei einer Nicht-Übereinstimmung für jeweils beide am Vergleich beteiligten Satelliten bzw. Werte erhöht. Weist ein Wert einen Gütezähler auf, der einen Plausibilitätsschwellenwert übersteigt, so wird der entsprechende Wert als fehlerhaft betrachtet und für die nachfolgende Sensordatenfusion bzw. zur Korrektur des Basissystems nicht verwendet.

Im Folgenden wird nun beispielhaft die Plausibilisierung von Werten eines Odometrienavigationssystems beschrieben. Dazu werden die Werte zunächst mit einem an die spezifischen Eigenschaften des Odometrienavigationssystems angepassten, sensorindividuellen Modell verglichen. Hierzu wird aus den Messdaten des Odometrienavigationssystems beispielsgemäß die ebene Geschwindigkeitsdifferenz $\Delta\vec{v}_{xy}$. Diese ergibt sich als Differenz zwischen der durch das Basissystem, einem Trägheitsnavigationssystem, und der durch die Odometriemessung ermittelten ebenen Geschwindigkeit in der fahrzeugfesten x-y-Ebene an der Position eines Rads. Die maximale für den Abgleich mit dem Modell tolerierbare Standardabweichung $\sigma_{Odo,Mess}$ der Geschwindigkeit berechnet sich aus dem "Geschwindigkeitsfehler" mit Standardabweichung $\sigma_{Vel,xy}$ und dem "Gierratenfehler" mit der über den bekannten Hebelarm zwischen Rad und Anbringungsort der Trägheitssensoren des Trägheitsnavigationssystems am Fahrzeug auf die Geschwindigkeit an der Position des Rades transformierten Standardabweichung $\sigma_{v\_\omega,z}$, sowie aus dem Messrauschen $\sigma_{Odo}$ der Odometriemessung:

$$\sigma_{Odo,Mess} = \sqrt{\sigma_{Vel,xy}^2 + \sigma_{v\_\omega,z}^2 + \sigma_{Odo}^2}$$

Die Kriterien zur Auswahl des Parameters *n* für die Plausibilisierung der Werte des Odometrienavigationssystems entsprechen beispielsgemäß denen bei der Plausibilisierung der Werte der Pseudoranges des Satellitennavigationssystems Die *n·σ*-Umgebung, und damit der Schwellwert $\xi_{IMU,Odo}$, ergibt sich somit als:

$$\xi_{IMU,Odo} = n \cdot \sigma_{Odo,Mess}$$

Beim Abgleich mit dem zugrunde liegenden stochastischen Modell wird ein Wert verworfen, falls:

$$\left\| \Delta\vec{v}_{xy} \right\| > \xi_{IMU,Odo}$$

Weiterhin wird ein erfindungsgemäßer Vergleich von Werten des Odometrienavigationssystems mit anderen Werten des Odometrienavigationssystems der gleichen Messepoche durchgeführt. Dabei wird der physikalische Zusammenhang ausgenutzt, dass die Räder eines Fahrzeugs starr miteinander verbunden sind und die Differenzgeschwindigkeit $v_{p,q}$ zwischen einem Rad *p* in Richtung des Ortsvektors $\vec{e}_{p,q}$ zu einem weiteren Rad *q*:

$$v_{p,q} = \left( \vec{v}_p - \vec{v}_q \right) \cdot \vec{e}_{p,q}$$

im Rahmen der Messunsicherheit $\sigma_{v\_mn}$ gleich null ist. Diese Messunsicherheit berechnet sich aus:

$$\sigma_{v\_pq} = \sqrt{\sigma_{Odo,p}^2 + \sigma_{Odo,q}^2}$$

Vergleichbar mit der Prüfung der GPS-Codemessungen untereinander werden nun die Werte jedes Rads mit den Werten aller anderen Räder paarweise verglichen und radindividuell bei Erkennen auf Nicht-Übereinstimmung ein Stellwert des dem jeweiligen Rad bzw. dem jeweiligen Wert zugeordneten Gütezählers erhöht. Bei Überschreiten des Plausibilitätsgrenzwerts wird der entsprechende Wert nicht plausibilisiert und verworfen. Der Fall eines orthogonal zur Messrichtung eines Rads stehenden Ortsvektors zu einem anderen Rad, bei dem eine gegenseitige Beobachtbarkeit von Nicht-Übereinstimmungen nicht gegeben ist, ist hierbei zu beachten. Dieser tritt beispielsweise an einer ungelenkten Hinterachse eines Zweispurfahrzeuges statisch auf, jedoch auch dynamisch bei Geradeausfahrt an der Vorderachse. Um ein allgemeingültiges Verfahren zur Plausibilisierung zu realisieren, wird der Plausibilitätsgrenzwert in Abhängigkeit der Messrichtung angepasst. Die gemeinsam beobachtbaren, und damit zur Plausibilisierung nutzbaren Messdaten bzw. Werte $\xi_{Nutz}$ zweier Raddrehzahlsensoren entsprechen dem Betrag der Projektion ihrer Messrichtungen $\vec{e}_{Mess,Rad,p}$ und $\vec{e}_{Mess,Rad,q}$ auf den Ortsvektor $\vec{e}_{p,q}$:

$$\xi_{Nutz} = \left| \left( \vec{e}_{Mess,Rad,p} \cdot \vec{e}_{p,q} \right) \cdot \left( \vec{e}_{Mess,Rad,q} \cdot \vec{e}_{p,q} \right) \right|$$

Der Einheitsvektor der Messrichtung eines Sensors verläuft in Radkoordinaten in Richtung der x-Achse, die Transformation in die Messrichtung in Fahrzeugkoordinaten $\vec{e}_{Mess,Rad}$ erfolgt über den Lenkwinkel $\delta_L$, der als reine Drehung um die z-Achse des Rads angenommen wird:

$$\vec{e}_{Mess,Rad} = \begin{bmatrix} \cos(\delta_L) \\ \sin(\delta_L) \\ 0 \end{bmatrix}$$

Der Schwellwert $\xi_{Odo,Odo}$ des hier zugrunde liegenden stochastischen Modells zur Überprüfung wird mit einem Nutzanteil $\xi_{Nutz}$ gewichtet, die $n\cdot\sigma$-Umgebung ergibt sich daraus als:

$$\xi_{Odo,Odo} = \xi_{Nutz} \cdot n \cdot \sigma_{v\_pq}$$

Die daraus resultierende Überprüfung gegen das stochastische Modell bewertet eine Messung als ungültig, falls

$$v_{p,q} > \xi_{Odo,Odo}$$

Somit wird also effektiv die Geschwindigkeit eines ersten Rads mit der Geschwindigkeit eines zweiten Rads unter Berücksichtigung der Messunschärfe verglichen.

**Patentansprüche**

1. Verfahren zur Verifizierung von Messdaten mindestens eines Sensorsystems (103, 104, 203, 204), wobei die Messdaten direkt oder indirekt Werte von physikalischen Größen beschreiben, wobei die Werte von indirekt beschriebenen physikalischen Größen aus den Messdaten und/oder aus bekannten physikalischen und/oder mathematischen Zusammenhängen berechnet werden und wobei mindestens drei eine identische Größe beschreibende Werte untereinander paarweise einem Vergleich unterworfen werden,
**dadurch gekennzeichnet, dass** mindestens zwei der mindestens drei eine identische Größe beschreibenden Werte voneinander unabhängig vom mindestens einen Sensorsystem (103, 104, 203, 204) bestimmt werden und ein dritter eine identische Größe beschreibender Wert von einem Basissensorsystem (101, 201) bestimmt wird, wobei jedem paarweisen Vergleich, der zu einer Nicht-Übereinstimmung führt, ein den am Vergleich beteiligten Werten zugeordneter Gütezähler um einen vorgegebenen Stellwert erhöht wird und dass diejenigen Werte verifiziert werden, deren Gütezähler einen Güteschwellenwert nicht überschreitet.

2. Verfahren nach mindestens einem der Ansprüche 1,
**dadurch gekennzeichnet, dass** der Vergleich über ein sensorsystemindividuelles stochastisches Modell erfolgt, wobei das stochastische Modell sensorsystemindividuelle Messunsicherheiten berücksichtigt.

3. Verfahren nach mindestens einem der Ansprüche 1 oder 2,
**dadurch gekennzeichnet, dass** ein dem Basissensorsystem (101, 201) zugeordneter Gütezähler niemals erhöht wird.

4. Verfahren mindestens einem der Ansprüche 1 bis 3,
**dadurch gekennzeichnet, dass** die dem Vergleich unterworfenen Werte zu einem identischen Zeitpunkt erfasst wurden.

5. Verfahren nach mindestens einem der Ansprüche 1 bis 4,
**dadurch gekennzeichnet, dass** bei einem Vergleich auf Nicht-Übereinstimmung erkannt wird, wenn die Werte um mehr als ihre Messunsicherheiten voneinander abweichen.

6. Verfahren nach mindestens einem der Ansprüche 1 bis 5,
**dadurch gekennzeichnet, dass** die verifiziert Werte zu einem Fusionsdatensatz fusioniert werden.

**7.** Verfahren nach mindestens einem der Ansprüche 1 bis 6,
**dadurch gekennzeichnet, dass** die Messdaten zumindest Messdaten eines Trägheitsnavigationssystems (101, 201), Messdaten eines globalen Satellitennavigationssystems (104, 204) und/oder Messdaten eines Odometrienavigationssystems (103, 203) sind.

**8.** Verfahren nach mindestens einem der Ansprüche 1 bis 7,
**dadurch gekennzeichnet, dass** das Trägheitsnavigationssystem (101, 201) das Basissensorsystem (101, 201) ist.

**9.** Verfahren nach mindestens einem der Ansprüche 1 bis 8,
**dadurch gekennzeichnet, dass** zur Berechnung von Werten von indirekt beschriebenen Größen Umlaufbahnen von Satelliten des Satellitennavigationssystems (104, 204) als fehlerfrei angenommen werden.

**10.** System zur Verifizierung von Messdaten mindestens eines Sensorsystems (103, 104, 203, 204), umfassend mindestens ein Sensorsystem (103, 104, 203, 204), ein Basissensorsystem (101, 201) und ein Verifizierungsmodul (205, 209, 211), wobei das mindestens eine Sensorsystems (103, 104, 203, 204) und das Basissensorsystem (101, 201) dazu ausgebildet sind, direkt oder indirekt Werte von physikalischen Größen beschreibende Messdaten auszugeben, wobei das Verifizierungsmodul (205, 209, 211) dazu ausgebildet ist, die Werte von indirekt beschriebenen physikalischen Größen aus den Messdaten und/oder aus bekannten physikalischen und/oder mathematischen Zusammenhängen zu berechnen und wobei das Verifizierungsmodul (205, 209, 211) dazu ausgebildet ist, mindestens drei eine identische Größe beschreibende Werte untereinander paarweise einem Vergleich zu unterwerfen,
**dadurch gekennzeichnet, dass** das mindestens eine Sensorsystem (103, 104, 203, 204) dazu ausgebildet ist, mindestens zwei der mindestens drei eine identische Größe beschreibenden Werte voneinander unabhängig zu bestimmen und dass das Basissensorsystem (101, 201) dazu ausgebildet ist, einen dritten eine identische Größe beschreibender Wert zu bestimmen, wobei jedem paarweisen Vergleich, der zu einer Nicht-Übereinstimmung führt, ein den am Vergleich beteiligten Werten zugeordneter Gütezähler um einen vorgegebenen Stellwert erhöht wird und dass diejenigen Werte verifiziert werden, deren Gütezähler einen Güteschwellenwert nicht überschreitet.

**11.** System nach Anspruch 10,
**dadurch gekennzeichnet, dass** das System dazu ausgebildet ist, ein Verfahren nach mindestens einem der Ansprüche 1 bis 9 auszuführen.

**12.** Verwendung des Systems nach mindestens einem der Ansprüche 10 und 11 in einem Kraftfahrzeug.

**Claims**

**1.** A method for verifying measured data of at least one sensor system (103, 104, 203, 204), wherein the measured data directly or indirectly describe values of physical quantities, wherein the values of indirectly described physical quantities are calculated from the measured data and/or from known physical and/or mathematical relationships, and wherein at least three values describing an identical quantity are compared with each other in pairs,
**characterized in that** at least two of the at least three values describing an identical quantity are determined independently of each other by the at least one sensor system (103, 104, 203, 204) and a third value describing an identical quantity is determined by a basic sensor system (101, 201), wherein, upon each pairwise comparison showing a variance, a quality counter assigned to the values involved in the comparison is incremented by a predetermined setting value, and **in that** those values whose quality counter does not exceed a quality threshold value are verified.

**2.** The method of Claim 1,
**characterized in that** the comparison is performed by means of a sensor-system-individual stochastic model, wherein the stochastic model takes sensor-system-individual measuring uncertainties into account.

**3.** The method of at least one of Claims 1 or 2,
**characterized in that** a quality counter assigned to the basic sensor system (101, 201) is never incremented.

**4.** The method of at least one of Claims 1 to 3,
**characterized in that** the values compared with each other were acquired at an identical time.

**5.** The method of at least one of Claims 1 to 4,

**characterized in that** the result of a comparison is considered to be a variance if the values deviate from each other by more than their measuring uncertainties.

6.  The method of at least one of Claims 1 to 5,
    **characterized in that** the verified values are merged into a merged data record.

7.  The method of at least one of Claims 1 to 6,
    **characterized in that** the measured data are at least measured data of an inertial navigation system (101, 201), measured data of a global satellite navigation system (104, 204), and/or measured data of an odometry navigation system (103, 203).

8.  The method of at least one of Claims 1 to 7,
    **characterized in that** the inertial navigation system (101, 201) is the basic sensor system (101, 201).

9.  The method of at least one of Claims 1 to 8,
    **characterized in that** for the calculation of values of indirectly described quantities, the accuracy of orbits of satellites of the satellite navigation system (104, 204) is assumed.

10. A system for verifying measured data of at least one sensor system (103, 104, 203, 204) comprising at least one sensor system (103, 104, 203, 204), a basic sensor system (101, 201), and a verification module (205, 209, 211), wherein the at least one sensor system (103, 104, 203, 204) and the basic sensor system (101, 201) are configured to directly or indirectly output values of measured data describing physical quantities, wherein the verification module (205, 209, 211) is configured to calculate the values of indirectly described physical quantities from the measured data and/or from known physical and/or mathematical relationships, and wherein the verification module (205, 209, 211) is configured to compare at least three values describing an identical quantity with each other in pairs,
    **characterized in that** the at least one sensor system (103, 104, 203, 204) is configured to determine at least two of the at least three values describing an identical quantity independently of each other, and that the basic sensor system (101, 201) is configured to determine a third value describing an identical quantity, wherein, upon each pairwise comparison showing a variance, a quality counter assigned to the values involved in the comparison is incremented by a predetermined setting value, and **in that** those values whose quality counter does not exceed a quality threshold value are verified.

11. The system of Claim 10,
    **characterized in that** the system is configured to perform a method of at least one of Claims 1 to 9.

12. A use of the system of at least one of Claims 10 and 11 in a motor vehicle.


**Revendications**

1.  Procédé pour la vérification de données de mesure d'au moins un système de détection (103, 104, 203, 204), les données de mesure décrivant directement ou indirectement des valeurs de grandeurs physiques, les valeurs de grandeurs physiques décrites indirectement étant calculées à partir des données de mesure et/ou à partir de contextes physiques et/ou mathématiques connus, et au moins trois valeurs décrivant une grandeur identique étant soumises à une comparaison par paires entre elles,
    **caractérisé en ce qu'**au moins deux des au moins trois valeurs décrivant une grandeur identique sont déterminées indépendamment les unes des autres par au moins un système de détection (103, 104, 203, 204) et une troisième valeur décrivant une grandeur identique est déterminée par un système de détection de base (101, 201), un compteur de qualité attribué aux valeurs soumises à la comparaison étant incrémenté d'une valeur de réglage spécifiée, lors de chaque comparaison par paire résultant en une non concordance, et en ce que les valeurs dont le compteur de qualité ne dépasse pas une valeur de seuil de qualité sont vérifiées.

2.  Procédé selon la revendication 1,
    **caractérisé en ce que** la comparaison est effectuée par un modèle stochastique spécifique au système de détection, le modèle stochastique prenant en compte des incertitudes de mesure spécifiques au système de détection.

3.  Procédé selon au moins l'une des revendications 1 ou 2,
    **caractérisé en ce qu'**un compteur de qualité attribué au système de détection de base (101, 201) n'est jamais incrémenté.

4. Procédé selon au moins l'une des revendications 1 à 3,
   **caractérisé en ce que** les valeurs soumises à la comparaison ont été saisies à un instant identique.

5. Procédé selon au moins l'une des revendications 1 à 4,
   **caractérisé en ce que** l'on constate une non concordance lors d'une comparaison lorsque l'écart entre les valeurs est supérieur à leurs incertitudes de mesure.

6. Procédé selon au moins l'une des revendications 1 à 5,
   **caractérisé en ce que** les valeurs vérifiées sont fusionnées en un jeu de données de fusion.

7. Procédé selon au moins l'une des revendications 1 à 6,
   **caractérisé en ce que** les données de mesure sont au moins des données de mesure d'un système de navigation inertielle (101, 201), des données de mesure d'un système mondial de navigation par satellite (104, 204) et/ou des données de mesure d'un système de navigation odométrique (103, 203).

8. Procédé selon au moins l'une des revendications 1 à 7,
   **caractérisé en ce que** le système de navigation inertielle (101, 201) est le système de détection de base (101, 201).

9. Procédé selon au moins l'une des revendications 1 à 8,
   **caractérisé en ce que,** pour le calcul de valeurs de grandeurs décrites indirectement, des orbites de satellites du système de navigation par satellite (101, 204) sont considérées comme exempts d'erreurs.

10. Système pour la vérification de données de mesure d'au moins un système de détection (103, 104, 203, 204), comprenant au moins un système de détection (103, 104, 203, 204), un système de détection de base (101, 201) et un module de vérification (205, 209, 211), l'au moins un système de détection (103, 104, 203, 204) et le système de détection de base (101, 201) étant formés pour émettre des données de mesure décrivant directement ou indirectement des valeurs de grandeurs physiques, le module de vérification (205, 209, 211) étant formé pour calculer des valeurs de grandeurs physiques décrites indirectement à partir des données de mesure et/ou à partir de contextes physiques et/ou mathématiques connus, et le module de vérification (205, 209, 211) étant formé pour soumettre au moins trois valeurs décrivant une grandeur identique à une comparaison par paires entre elles, **caractérisé en ce qu'**au moins un système de détection (103, 104, 203, 204) est formé pour déterminer indépendamment les unes des autres au moins deux des au moins trois valeurs décrivant une grandeur identique, et **en ce que** le système de détection de base (101, 201) est formé pour déterminer une troisième valeur décrivant une grandeur identique, un compteur de qualité attribué aux valeurs soumises à la comparaison étant incrémenté d'une valeur de réglage spécifiée, lors de chaque comparaison par paire résultant en une non concordance, et **en ce que** les valeurs dont le compteur de qualité ne dépasse pas une valeur de seuil de qualité sont vérifiées.

11. Système selon la revendication 10,
    **caractérisé en ce que** le système est formé afin d'exécuter un procédé selon au moins l'une des revendications 1 à 9.

12. Utilisation du système selon au moins l'une des revendications 10 et 11 dans un véhicule.

Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010063984 A1
- DE 102012216211 A1
- DE 10243265 A1
- DE 102012216215 A1